(19) Europäisches Patentamt / European Patent Office / Office européen des brevets

(11) **EP 2 316 643 A1**

(12) **EUROPEAN PATENT APPLICATION**

(43) Date of publication:
04.05.2011 Bulletin 2011/18

(51) Int Cl.:
**B32B 27/08** (2006.01) **B32B 27/32** (2006.01)
**C09D 175/14** (2006.01) **B32B 27/20** (2006.01)

(21) Application number: 09174193.4

(22) Date of filing: 27.10.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(71) Applicant: **Dai Nippon Printing Co., Ltd.**
**Tokyo 162-8001 (JP)**

(72) Inventors:
• **Wakamatsu, Yuji**
**Tokyo, Tokyo 162-8001 (JP)**

• **Takemoto, Masataka**
**Tokyo, Tokyo 162-8001 (JP)**
• **Masuda, Hiroshi**
**Tokyo, Tokyo 162-8001 (JP)**
• **Nakayama, Hiroaki**
**Tokyo, Tokyo 162-8001 (JP)**

(74) Representative: **Gille Hrabal Struck Neidlein Prop**
**Roos**
**Patentanwälte**
**Brucknerstrasse 20**
**40593 Düsseldorf (DE)**

(54) **Decorative sheet and decorative material laminated with the same**

(57) The present invention relates to a decorative sheet prepared by forming a curing type resin layer comprising an actinic energy ray curing type resin on an uppermost surface of a thermoplastic resin base material sheet, wherein the curing type resin layer contains silica, and at least a part of the above silica is silica having a hydrophobicity degree of 40 or more and 60 or less measured according to a methanol titration method.

Capable of being provided is a decorative sheet which has a curing type resin layer on an uppermost surface and which is excellent in an impact resistance, a scratching resistance and an alkali resistance and excellent as well in an adhesive property with a lustering agent (wax, lacquer and the like).

EP 2 316 643 A1

**Description**

BACKGROUND OF THE INVENTION

The present invention relates to a decorative sheet which has a curing type resin layer comprising an actinic energy ray curing type resin containing silica on an uppermost surface and which is excellent in an adhesive property with a lustering agent (wax, lacquer and the like), an alkali resistance, a contamination resistance and the like.

RELATED ART

A decorative sheet which has a curing type resin layer comprising an actinic energy ray curing type resin on an uppermost surface is excellent in physical properties such as an abrasion resistance, an impact resistance, a contamination resistance, a scratching resistance and the like, and therefore it is suitably used as a decorative sheet for floor materials and fittings. In this case, the curing type resin layer suitably contains a prepolymer, an oligomer and/or a monomer having a radically polymerizable double bond which can be subjected to polymerization cross-linking reaction by irradiation with an actinic energy ray such as a UV ray, an electron beam and the like in a molecule. Such decorative sheet is disclosed in, for example, a patent documents 1 and 2.

An actinic energy ray curing type resin layer formed on an uppermost surface contains silica in a certain case for the purpose of obtaining a delustering effect. Also, the actinic energy ray curing type resin layer is excellent as it is in physical properties such as an abrasion resistance, a scratching resistance and the like, and it contains specific spherical particles (silica and the like) in a certain case in order to further enhance an abrasion resistance and a scratching resistance considering transportation of the decorative sheet. Such decorative sheet is disclosed in, for example, a patent document 3.

However, when untreated silica is added to the actinic energy ray curing type resin layer as is the case with the patent document 3, the problem that the alkali resistance is reduced is involved therein. To be specific, involved is the problem that when detergents, chemicals and the like which contain alkali components are brought into contact therewith, whitening is brought about.

Accordingly, the curing type resin layer has room for further improvement so that it is excellent in an abrasion resistance and a scratching resistance and satisfies an alkali resistance and so that considering maintenance such as coating a lustering agent (wax, lacquer and the like) on a surface, it can satisfy an adhesive property with a lustering agent and the like.

Patent document 1: Japanese Patent Application Laid-Open No. 260282/2001
Patent document 2: Japanese Patent Application Laid-Open No. 276133/2003
Patent document 3: Japanese Patent Application Laid-Open No. 313600/2005

DISCLOSURE OF THE INVENTION

An object of the present invention is to provide a decorative sheet which has a curing type resin layer comprising an actinic energy ray curing type resin containing silica on an uppermost surface and which is excellent in an abrasion resistance and a scratching resistance and excellent as well in an alkali resistance and an adhesive property with a lustering agent.

Intensive researches repeated by the present inventors have resulted in finding that the object described above can be achieved when the curing type resin layer contains silica having specific physical properties, and they have come to complete the present invention.

That is, the present invention provides the following items:

(1) a decorative sheet prepared by forming a curing type resin layer comprising an actinic energy ray curing type resin on an uppermost surface of a thermoplastic resin base material sheet, wherein the curing type resin layer contains silica, and at least a part of the above silica is silica having a hydrophobicity degree of 40 or more and 60 or less measured according to a methanol titration method,

(2) the decorative sheet according to the item (1) described above, wherein the above silica is treated with a silicone oil,

(3) the decorative sheet according to the item (1) or (2) described above, wherein the thermoplastic resin base material sheet comprises a polyolefin base resin sheet and

(4) a decorative material prepared by laminating the decorative sheet according to any of the items (1) to (3) described above on an adherend so that the curing type resin layer is an uppermost surface layer.

The decorative sheet of the present invention is excellent in an abrasion resistance and a scratching resistance by optimizing a hydrophobicity degree of silica contained in the curing type resin layer comprising an actinic energy ray curing type resin provided on an uppermost surface thereof and can prevent or inhibit whitening while maintaining an adhesive property with a lustering agent and the like (wax, lacquer and the like) even when a surface of the decorative sheet is brought into contact with alkaline detergents, chemicals and the like.

BRIEF DESCRIPTION OF THE DRAWINGS

Fig. 1 is a cross-sectional drawing showing one example of the decorative sheet according to the present invention.
Fig. 2 is a cross-sectional drawing showing another example of the decorative sheet according to the present invention.
Fig. 3 is a cross-sectional drawing showing one example of the decorative material according to the present invention.

EXPLANATION OF THE CODES

1    Decorative sheet
2    Thermoplastic resin base material sheet
3    Curing type resin layer
4    Primer layer
5    Reverse side primer layer
6    Picture print layer
7    Solid print layer
8    Primer layer
9    Adhesive layer
10   Adhesive layer
11   Adherend
21   Transparent thermoplastic resin sheet
22   Thermoplastic resin base material sheet

BEST MODE FOR CARRYING OUT THE INVENTION

The decorative sheet of the present invention shall be explained below in details.
Decorative sheet:

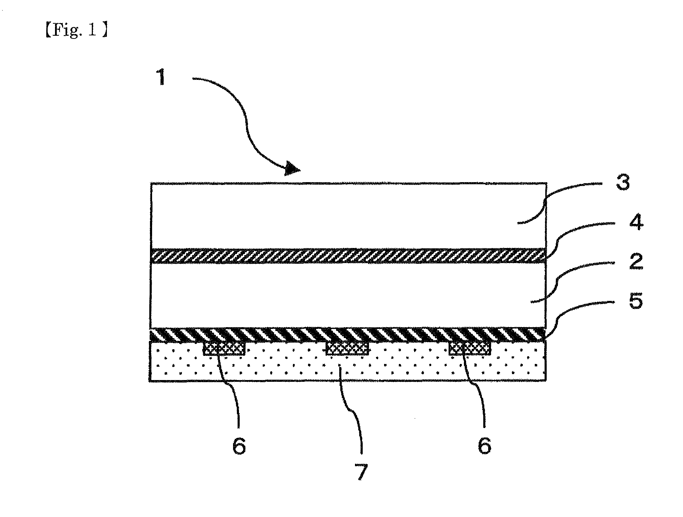

The decorative sheet of the present invention is prepared by forming, as shown in Fig. 1, an actinic energy ray curing type resin layer 3 on an uppermost surface of a thermoplastic resin base material sheet 2 comprising a polyolefin resin and the like. The above curing type resin layer contains silica, and at least a part of the above silica is silica having a hydrophobicity degree of 40 or more and 60 or less measured according to a methanol titration method. A content of the silica having a hydrophobicity degree of 40 or more and 60 or less based on the whole silica is preferably 70 % by mass or more, more preferably 90 % by mass or more and particularly preferably 100 % by mass, that is, the whole amount is particularly preferably the silica having a hydrophobicity degree of 40 or more and 60 or less.

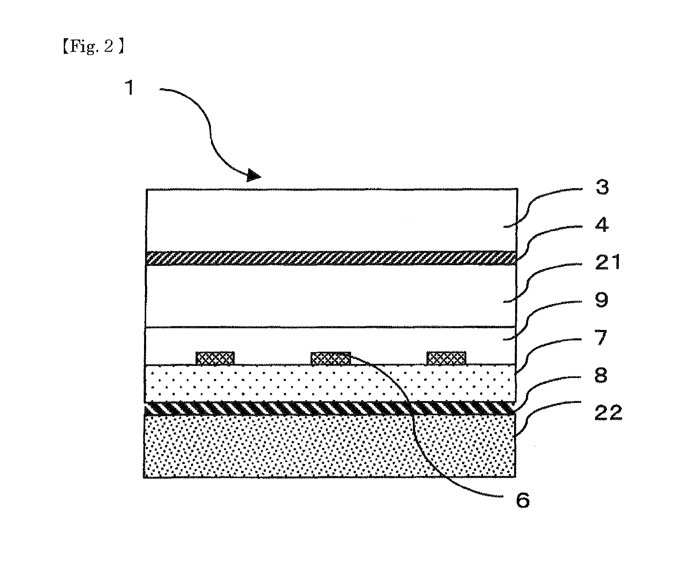

In the decorative sheet shown in Fig. 1 as an example, a primer layer 4 is provided on a surface of the thermoplastic resin base material sheet 2, and the actinic energy ray curing type resin layer 3 is laminated thereon. Further, a picture print layer 6 and a solid print layer 7 are formed on a reverse surface side of the thermoplastic resin base material sheet 2 via a reverse side primer layer 5 by printing. The above embodiment is a decorative sheet of a type referred to as a so-called "back print sheet".
Another example of the decorative sheet of the present invention is shown in Fig. 2. In the decorative sheet 1 shown in Fig. 2, a primer layer 8 is provided on a surface of a thermoplastic resin base material sheet 22; a solid print layer 7 and a picture print layer 6 are formed thereon by printing; a transparent thermoplastic resin sheet 21 is laminated via an adhesive layer 9; a primer layer 4 is provided on a surface thereof; and an actinic energy ray curing type resin layer 3 is formed thereon. The above embodiment is a decorative sheet of a type referred to as a so-called "doubling sheet". In general, a colored resin sheet is used for the thermoplastic resin base material sheet 22, and a non-colored resin sheet may be used.

Another embodiment includes an embodiment in which the picture print layer is formed on the thermoplastic resin base material sheet 22 and in which a transparent adhesive layer, a transparent resin layer and a curing type resin layer are further laminated thereon. In the above embodiment, a primer layer may further be provided, if necessary, on a surface and a reverse surface of the thermoplastic resin base material sheet 22, and a primer layer may further be provided as well between the transparent resin layer and the curing type resin layer.

Curing type resin layer:

The decorative sheet of the present invention is excellent in an abrasion resistance and a scratching resistance and excellent as well in an alkali resistance and an adhesive property with a lustering agent and the like (wax, lacquer and the like) by providing the actinic energy ray curing type resin layer containing silica having the specific physical properties described above as the curing type resin layer on an uppermost surface.

The curing type resin layer is preferably a cured matter layer comprising a mixture containing a urethane (meth) acrylate oligomer (A) having a weight average molecular weight of 1000 to 4000 which has two or more radically polymerizable unsaturated groups in a molecule and an aliphatic urethane (meth)acrylate oligomer (B) having 3 to 15 radically polymerizable unsaturated groups in a molecule.

The urethane (meth)acrylate oligomer (A) used for the curing type resin layer is a so-called multifunctional urethane acrylate oligomer having two or more radically polymerizable unsaturated groups in a molecule and is an oligomer having a weight average molecular weight of 1000 to 4000 which is prepared by combining polyisocyanate such as diisocyanate and the like, polyhydric alcohol of a weight average molecular weight of 500 to 2000 having two or more hydroxyl groups in a molecule and a (meth)acrylate compound having a hydroxyl group at an end and having a radically polymerizable unsaturated group.

If a weight average molecular weight of the urethane (meth)acrylate oligomer (A) is less than 1000, it can not sufficiently exert a flexibility provided to urethane (meth)acrylate in the resin layer after cured and is reduced in a bending processability such as V cut processing and wrapping processing and an emboss processability in a certain case. Also, if the weight average molecular weight exceeds 4000, the characteristics such as the contamination resistance and the like are reduced in a certain case.

The polyisocyanate described above is preferably aliphatic, alicyclic or aromatic isocyanate having two or more isocyanate groups in a molecule and includes, for example, diisocyanates such as 2,4-tolylenediisocyanate, 4,4'-diphenylmethanediisocyanate, 1,6-hexamethylenediisocyanate, isophoronediisocyanate, hydrogenated tolylenediisocyanate, hydrogenated diphenylmethanediisocyanate and the like and triisocyanates such as lysine ester triisocyanate, 1,4,8-triisocyanateoctane, 1,3,6-triisocyanatehexane, 1,3,5-triisocyanatecyclohexane, 1,3,5-triisocyanatemethylbenzene, triphenylmethane-4,4',4"-triisocyanate and the like. The above polyisocyanates may be used in combination of two or more kinds thereof.

The polyhydric alcohol having a weight average molecular weight of 500 to 2000 includes polyesterpolyols, polyetherpolyols, polycarbonatepolyols, and acrylpolyols and the like each having hydroxyl groups at both ends. The polyetherpolyols described above include (a) addition reaction products of diol compounds having an aromatic or spiro ring skeleton with lactone compounds or derivatives thereof or epoxy compounds, (b) condensation products of polybasic acids with alkylene glycols and (c) ring-opened polyester compounds derived from cyclic ester compounds, and they can be used alone or in combination of two or more kinds thereof.
The polyetherpolyols described above include polytetramethylene glycol, polyethylene glycol, polypropylene glycol and the like.
Among the compounds described above, particularly polyesterdiols having a weight average molecular weight of 500 to 2000 in which adipic acid is used as polybasic acid of (b) and which are obtained as a condensation product with alkylene glycol and have hydroxyl groups at both ends are preferably used since various physical properties thereof are good.

Also, (meth)acrylates having a hydroxyl group at an end and having a radically polymerizable unsaturated group are ester compounds of acrylic acid, methacrylic acid or derivatives thereof and have hydroxyl groups at ends. To be specific, shown as the examples thereof are (meth)acrylic acid ester compounds having one polymerizable unsaturated group, such as 2-hydroxyethyl (meth)acrylate, 2-hydroxypropyl (meth)acrylate, 2-hydroxybutyl (meth)acrylate, 4-hydroxycyclohexyl (meth)acrylate, 5-hydroxycyclooctyl (meth)acrylate, 2-hydroxy-3-phenyloxypropyl (meth)acrylate and the like and other (meth)acrylic acid ester compounds having two or more polymerizable unsaturated groups in a molecule.

The urethane (meth)acrylate oligomer (A) is preferably an oligomer having a weight average molecular weight of 1000 to 3000 obtained by reacting (polyaddition reaction) polyesterpolyol having a weight average molecular weight of 500 to 2000 which is formed from alkylene glycol and adipic acid as a polyhydric alcohol component, isophoronediisocyanate as a diisocyanate component and hydroxyethyl (meth)acrylate as an acrylate component.

The aliphatic urethane (meth)acrylate oligomer (B) used for the curing type resin layer has 3 to 15 radically polymerizable unsaturated groups such as a (meth)acryloyl group and the like in a molecule, and it is multifunctional (3 to 15 functional) urethane acrylate obtained by reacting aliphatic diisocyanate, multifunctional polyol and (meth)acrylate having a hydroxyl group at an end and having a radically polymerizable unsaturated group.

The aliphatic diisocyanate described above includes 1,6-hexamethylenediisocyanate, isophoronediisocyanate, hydrogenated tolylenediisocyanate, hydrogenated diphenylmethanediisocyanate and the like.

The (meth)acrylate described above having a hydroxyl group and a radically polymerizable unsaturated group includes (meth)acrylic acid ester compounds having one polymerizable unsaturated group, such as 2-hydroxyethyl (meth)acrylate, 2-hydroxypropyl (meth)acrylate, 2-hydroxybutyl (meth)acrylate, 4-hydroxycyclohexyl (meth)acrylate, 5-hydroxycyclooctyl (meth)acrylate, 2-hydroxy-3-phenyloxypropyl (meth)acrylate and the like.

The aliphatic urethane (meth)acrylate oligomer (B) is available, to be specific, in the form of commercial products such as UA-306H (hexafunctional urethane acrylate manufactured by Kyoeisha Chemical Co., Ltd.), U-15HA (15 functional urethane acrylate oligomer manufactured by Shin-Nakamura Chemical Co., Ltd.), Shiko UV7550 (trifunctional urethane acrylate manufactured by Nippon Synthetic Chemical Industry Co., Ltd.) and the like.

Silica having a hydrophobicity degree of 40 or more and 60 or less measured according to the methanol titration method is contained in the curing type resin layer together with the actinic energy ray curing type resin described above. When the hydrophobicity degree is less than 40, the alkali resistance is not enhanced, and when the hydrophobicity degree exceeds 60, the adhesive property with a lustering agent and the like (wax, lacquer and the like) is reduced. Addition of silica having such a specific hydrophobicity degree allows the decorative sheet to be excellent in an abrasion resistance and a scratching resistance and makes it possible to enhance both characteristics of the alkali resistance and the adhesive property with a lustering agent and the like (wax, lacquer and the like). A content of silica having a hydrophobicity degree of 40 or more and 60 or less measured according to the methanol titration method shall not specifically be restricted, and it is 0.1 to 50 parts by weight, preferably 5 to 30 parts by weight based on 100 parts by weight of the total amount of the oligomer (A) and the oligomer (B).

A method for obtaining silica having a hydrophobicity degree of 40 or more and 60 or less measured according to the methanol titration method shall not be restricted as long as it is a method in which silica can be prevented or inhibited from being denaturalized while maintaining the adhesive property with a lustering agent and the like (wax, lacquer and the like) even when detergents, chemicals and the like are adhered onto a surface of the silica. It includes, for example, a method in which polysiloxane is reacted with silica under heating and applying pressure in the presence of amines and water and in which the silica is subjected to drying treatment to cover at least a part of the silica with a silicone oil (so-called silicone oil treatment) and a method in which a silane coupling agent, a glycol base treating agent and other hydrocarbon base treating agents (including treating agents used for so-called wax treatment) are adsorbed onto at least a part of silanol groups present on a surface of untreated silica to provide the silica with hydrophobicity. The above methods can be used alone or in combination of two or more kinds thereof.

Measurement of the hydrophobicity degree described above shall be explained below.

Inorganic oxide 0.2 g for measuring a hydrophobicity degree thereof is added to a glass vessel having an inner diameter of 7 cm and a capacity of 2 L or more containing 100 mL of ion-exchanged water, and the mixture is stirred by means of a magnetic stirrer. A tip of a buret containing methanol is put into the liquid to dropwise add 20 mL of methanol under stirring, and stirring is terminated after 30 seconds to observe the state after one minute since terminating stirring. The above operation is repeated. Assuming that a total amount of methanol added until the inorganic oxide does not float any more on a liquid surface after one minute since terminating stirring is Y (mL), a value calculated and determined according to the following equation is set as the hydrophobicity degree. A water temperature in the beaker (glass vessel) is controlled to 20°C $\pm$ 1°C to carry out the measurement described above.

$$\text{Hydrophobicity degree} = [Y/(100+Y)] \times 100$$

An average particle diameter of the silica shall not specifically be restricted and can suitably be set according to use of the silica, a thickness of the curing type resin layer and the like. Usually, the average particle diameter (measured by a laser diffraction method) can be set in a range of 1 to 30 $\mu$m according to a thickness of the curing type resin layer. Among the above range, the thickness is preferably 1 to 25$\mu$m, more preferably 1 to 15 $\mu$m when the decorative sheet is used for a floor material.

Also, the BET specific surface area is preferably 50 to 500 m2/g, more preferably 100 to 400 m2/g.

Powders having an average particle diameter of 1 to 30$\mu$m such as inorganic particles of $\alpha$-alumina, silica, chromium oxide, iron oxide, diamond and the like and organic resin particles such as synthetic resin beads of cross-linked acryl and the like may be added in addition to the silica described above for the purpose of further enhancing lustering (matting) and the scratching resistance. The above powders having various particle forms are used, and particularly the powders which are spherical or similar to a spherical form are preferably used because of the reasons that they have a good scratching resistance and a good coating aptitude and that the hand feeling is not rough. An addition amount of the powders described above is preferably 1 to 30 parts by weight based on 100 parts by weight of the total amount of the oligomer (A) and the oligomer (B).

A lubricant can be added to the curing type resin layer in order to improve lubrication on a surface. The lubricant includes polyethylene wax, ethylene tetrafluoride resin powders, metal soaps, plastic beads, silicone oils and the like. An addition amount of the lubricant is preferably 0.5 to 10 parts by weight based on 100 parts by weight of the total amount of the oligomer (A) and the oligomer (B).

UV absorbers of a benzotriazole base, a benzophenone base, a salicylate base, a triazine base and the like are preferably added to the curing type resin layer in order to enhance a weatherability. When the UV absorber is added, the resin layer is cured by irradiating with an electron beam. When the resin layer is cured by irradiating with a UV ray, used as a photopolymerization initiator are acetophenones, benzophenones, Michler's benzoyl benzoate, $\alpha$-aminoxime esters, tetramethylthiuram monosulfide, thioxanthones, aromatic diazonium salts, aromatic sulfonium salts, metallocene and the like, and n-butylamine, triethylamine, tri-n-butylphosphine and the like are used as a photopolymerization accelerator (sensitizer).

An antibacterial agent may be added to the curing type resin layer in order to provide it with an antibacterial property. The antibacterial agent includes inorganic antibacterial agents and organic antibacterial agents. In particular, the inorganic antibacterial agents have usually a high safety as compared with the organic antibacterial agents and are excellent in a durability and a heat resistance, and therefore they are preferred. The inorganic antibacterial agents are prepared by carrying antibacterial metals such as copper, Zinc and the like including silver on various inorganic carriers. An addition amount of the antibacterial agents is preferably 0.1 to 10 parts by weight based on 100 parts by weight of the total amount of the oligomer (A) and the oligomer (B).

The curing type resin layer is prepared by coating a coating composition containing the respective components described above by a suitable means and curing the coating film by irradiating with actinic energy ray such as an electron beam, a UV ray and the like. Various additives including a solvent, a colorant such as a dye, a pigment and the like, a gloss controlling agent, a filler such as an extending agent and the like, a defoaming agent, a leveling agent, a thixotropy-providing agent and the like can be added, if necessary, to the above coating composition.

In respect to an irradiation dose of an electron beam, an electron having an energy of usually 100 to 1000 keV, preferably 100 to 300 keV is radiated at an irradiation dose of 0.1 to 30 Mrad. When the irradiation dose is less than 0.1 Mrad, curing is likely to be unsatisfactory, and when the irradiation dose exceeds 30 Mrad, the cured coating film or the base material is likely to be damaged. Also, an irradiation dose in a case of curing with a UV ray is preferably 50 to 1000 mJ/cm$^2$. If an irradiation dose of a UV ray is less than 50 mJ/cm$^2$, curing is likely to be unsatisfactory, and if the irradiation dose exceeds 1000 mJ/cm$^2$, the cured coating film is likely to turn yellow.

In respect to an actinic energy ray irradiation equipment used for curing the curing type resin layer, various electron beam accelerators of a Cockcroft Walton type, a Van de Graaff type, a resonance transformer type, an insulating core transformer type, a linear type, a Dynamitron type, a high frequency type and the like are used when an electron beam is radiated. Also, light sources such as a ultrahigh pressure mercury lamp, a high pressure mercury lamp, a low pressure mercury lamp, a carbon arc, a black light lamp, a metal halide lamp and the like are used when a UV ray is radiated.

Solvents usually used for paints, inks and the like are used as the solvent described above, and the specific examples thereof include aromatic hydrocarbons such as toluene, xylene and the like; ketones such as acetone, methyl ethyl ketone, methyl isobutyl ketone, cyclohexanone and the like; acetic esters such as ethyl acetate, isopropyl acetate, amyl acetate and the like; alcohols such as methyl alcohol, ethyl alcohol, isopropyl alcohol and the like; ethers such as dioxane, tetrahydrofuran, diisopropyl ether and the like; and mixtures of two or more kinds thereof.

1) A direct coating method in which a coating composition is directly coated or 2) a transfer coating method in which a resin layer is formed in advance on a surface of a peeling base material and in which the above layer is then transferred is used as a method for forming a layer of the coating composition.

In the direct coating method of 1) described above, capable of being used are gravure coating, gravure reverse coating, gravure offset coating, spinner coating, roll coating, reverse roll coating, kiss coating, wheeler coating, dip coating, solid coating by a silk screen, wire bar coating, flow coating, comma coating, free flow coating, brush coating, spray coating and the like, and gravure coating is preferred.

The transfer coating method of 2) described above is a method in which a coating film is formed once on a thin sheet (film) and then cross-linked and cured and in which the cured coating film is transferred onto a desired part. The same various coating means as in the direct coating method described above can be used as means for forming the curing type resin layer on the thin sheet. The following methods (a) to (c) can be used as the transfer coating method.

(a) Injection molding simultaneous transferring methods disclosed in Japanese Patent Publication No. 42080/1990 and Japanese Patent Publication No. 19924/1992. Or an injection molding simultaneous laminating method disclosed in Japanese Patent Publication No. 19132/1975.

(b) Vacuum molding simultaneous transferring methods disclosed in Japanese Patent Application Laid-Open No. 288214/1992 and Japanese Patent Application Laid-Open No. 57786/1993. Or a vacuum molding simultaneous laminating method disclosed in Japanese Patent Publication No. 45768/1981.

(c) Wrapping simultaneous transferring methods or wrapping simultaneous laminating methods disclosed in Japanese Patent Publication No. 51900/1984, Japanese Patent Publication No. 5895/1986 and Japanese Patent Publication No. 2666/1991.

A thickness of the curing type resin layer shall not specifically be restricted and can suitably be set, and it is usually 1 to 30μm, particularly preferably 5 to 25μm.

Thermoplastic resin base material sheet and transparent thermoplastic resin sheet:

Resins constituting the thermoplastic resin base material sheet and the transparent thermoplastic resin sheet include, because of an excellent processing aptitude and no generation of harmful gases in combustion, polyolefin base thermoplastic resins; thermoplastic ester resins such as polyethylene terephthalate, polybutylene terephthalate, polyethylene naphthalate, polyethylene naphthalate-isophthalate copolymers, polycarbonate, polyallylate and the like; acryl base thermoplastic resins such as polymethyl methacrylate, polyethyl methacrylate, polyethyl acrylate, polybutyl acrylate and the like; polyamide base thermoplastic resins such as nylon-6, nylon-66 and the like; and non-halogen base thermoplastic resins such as polyimide, polyurethane, polystyrene, acrylonitrile-butadiene-styrene resins and the like. The above thermoplastic resins may be used alone or in a mixture of two or more kinds thereof, and polyolefin base resin sheets are preferably used comprehensively considering an aptitude for providing a picture print layer and a concave pattern as designs, no generation of harmful gases in combustion which is a problem in recent years and a cost.

The polyolefin base resins shall not be restricted and include, for example, polyethylene (low density and high density), polypropylene, polybutene, polymethylpentene, ethylene-propylene copolymers, ethylene-vinyl acetate copolymers, ethylene-acrylic acid copolymers, ethylene-propylene-butene copolymers, ethylene-vinyl acetate copolymers, ethylene-vinyl alcohol copolymers, polyolefin base thermoplastic elastomers and the like. Among them, polypropylene, ethylene-propylene-butene copolymers, polyolefin base thermoplastic elastomers and the like are particularly preferred.

Homopolymers or copolymers comprising polypropylene as a principal component are preferred as well and include, for example, homo polypropylene resins, random polypropylene resins, block polypropylene resins and resins of α-olefin having 2 to 20 carbon atoms other than polypropylene having a polypropylene crystalline part. In addition thereto, polypropylene-α-olefin copolymers containing 15 mole % or more of comonomers of ethylene, butane-1, 4-methylpentene-1, hexene-1 or octene-1 are preferred as well.

Representative as the polyolefin base thermoplastic elastomers described above are 1) elastomers prepared by adding an elastomer as a soft segment and an inorganic filler to a principal raw material comprising either high density polyethylene or polypropylene which is a hard segment, 2) elastomers comprising a mixture of isotactic polypropylene described in Japanese Patent Publication No. 23278/1994 which is a hard segment and atactic polypropylene as a soft segment and 3) elastomers comprising ethylene-propylene-butene copolymers described in Japanese Patent Application Laid-Open No. 111055/1997, Japanese Patent Application Laid-Open No. 77371/1993 and Japanese Patent Application Laid-Open No. 316358/1995.

The resins constituting the thermoplastic resin base material sheet and the transparent thermoplastic resin sheet each described above are turned into films by conventionally used methods such as, for example, a calendar method, an inflation method, a T die extrusion method and the like, whereby the thermoplastic resin base material sheet and the thermoplastic resin sheet can be obtained. When a composition containing a colorant, an inorganic filler or both of them is used as the thermoplastic resin to form a film by a melt extrusion method, the thin film formed is reduced in a film-forming aptitude, and a surface thereof is not smoothly finished. In general, when total 10 parts by weight or more of the colorant and the like is added to form a film of 80μm or less, the above tendency is outstanding. Then, in the above case, three layer extrusion is employed, and it is advisable to add the colorant only to the central layer and add no pigment and the like to the outermost layers at front and rear sides.

The thermoplastic resin base material sheet and the transparent thermoplastic resin sheet each described above may stay either in a state of non-stretching or a state of stretching in a monoaxial or biaxial direction. In the transparent thermoplastic resin, the non-stretched sheet is more excellent in a molding aptitude such as V cut processing and the like. Further, it may stay in a state of laminating in two or more layers and can suitably assume various constitutions.

A thickness thereof shall not specifically be restricted and can be set according to the characteristics of the products, and it is usually 5 to 300μm.

The thermoplastic resin base material sheet and the transparent thermoplastic resin sheet may be blended, if necessary, with additives. The additives include, for example, fillers such as calcium carbonate, clay and the like, flame retardants such as magnesium hydroxide and the like, UV absorbers, light stabilizers, antioxidants, lubricants, foaming agents, colorants (refer to the following) and the like. A blending amount of the additives can be set according to the characteristics of the products.

The colorant shall not specifically be restricted, and publicly known colorants such as pigments, dyes and the like can be used. They include, for example, inorganic pigments such as titan white, zinc oxide, iron oxide red, vermilion, ultramarine blue, cobalt blue, titan yellow, chrome yellow, carbon black and the like; organic pigments (including dyes) such as isoindolinone, Hansa yellow A, quinacridone, permanent red 4R, phthalocyanine blue, indathrene blue RS, aniline black and the like; metal pigments such as aluminum, brass and the like; and pearlescent (pearl) pigments comprising flake powders of titanium dioxide-covered mica, basic lead carbonate and the like. A coloring mode of the base material sheet includes transparent coloring and opaque coloring (masking coloring), and they can optionally be selected. For example, when the thermoplastic resin base material sheet is provided with a coloring masking function for an adherend (a base material of a decorative material such as lauan and the like), opaque coloring is preferably selected. On the other hand, when original patters of the adherend are visualized, transparent coloring is preferably selected.

One surface or both surfaces of the thermoplastic resin base material sheet and the transparent thermoplastic resin sheet may be subjected, if necessary, to surface treatment such as corona discharge treatment, ozone treatment, plasma treatment, ionizing radiation treatment, bichromic acid treatment and the like. For example, when corona discharge treatment is carried out, a surface tension on a surface of the base material is set to 30 dyne or more, preferably 40 dyne or more. The surface treatment can be carried out according to conventional methods of the respective treatments. Active hydrogen atom-containing functional groups such as a hydroxyl group, a carboxyl group and the like can be formed on a surface of the thermoplastic resin sheet by carrying out the above ready adhesion treatments. When a polyolefin base resin sheet is produced by a melt extrusion method, the above polar functional groups are formed on the surface to some extent in producing the sheet. Accordingly, if the polar functional groups are formed sufficiently in producing the sheet, the ready adhesion treatment may be omitted.

A primer layer may be provided, if necessary, on one surface or both surfaces of the thermoplastic resin base material sheet and the transparent thermoplastic resin sheet. Formation of the primer layer makes it possible to enhance an interlayer adhesive force with adjacent layers. The primer layer can be formed by coating a publicly known primer agent on one surface or both surfaces of the base material sheet.

Adhesive layer:

In a case of the decorative sheet having an embodiment shown in Fig. 2, the transparent thermoplastic resin sheet 21 can be laminated on the thermoplastic resin base material sheet 22 via the adhesive layer 9. The adhesive shall not specifically be restricted, and adhesives which are publicly known in the field of a decorative sheet can be used.

The adhesives which are publicly known in the field of a decorative sheet include, for example, thermoplastic resins such as polyamide resins, acryl resins, vinyl acetate resins and the like and curable resins such as thermosetting urethane resins and the like. Further, two-component type polyurethane resins using isocyanate as a curing agent or polyester resins can be used as well. A thickness of the adhesive layer shall not specifically be restricted and is usually 0.1 to 30μm.

Further, a method in which the transparent thermoplastic resin sheet 21 comprising a polyolefin base resin is coated on the thermoplastic resin base material sheet by melt extrusion and laminated thereon at the same time as producing the sheet may be used in addition to the method described above.

Primer layer:

The primer layer 4 is provided in order to laminate the curing type resin layer on the thermoplastic resin base material sheet so that they are adhered well. The primer layer is formed by coating a solution of a vinyl chloride-vinyl acetate copolymer, an acryl resin, a polyester resin, a polyurethane resin (a two-component curing type comprising an isocyanate curing agent and various polyols), chlorinated polypropylene, chlorinated polyethylene and the like. From the viewpoints that an adhesive property between both layers as well as a durability is enhanced and that the adhesive property is scarcely reduced with the passage of time, two-component curing type polyurethane resins are preferred. Further, obtained as well is the advantage that if emboss processing is carried out from an upper side of the curing type resin layer after forming the curing type resin layer, the curing type resin layer is less liable to be peeled off.

The two-component curing type polyurethane resin used for the primer layer 4 is preferably a two-component curing type urethane resin comprising an acryl-urethane block copolymer as a base resin and isocyanate as a curing agent. The acryl-urethane block copolymer is preferably a polymer in which an isocyanate component in a urethane part is aliphatic isocyanate and/or alicyclic isocyanate. Also, aliphatic isocyanate and/or alicyclic isocyanate are preferably used as well for isocyanate as the curing agent.

An adhesive property with the curing type resin layer comprising an actinic energy curing type resin of a urethane acrylate base is improved by using as a base resin, an acryl-urethane block copolymer, that is, a polymer containing both blocks of an acryl part and a urethane part. Further, aliphatic or alicyclic isocyanate is used for the isocyanate component used for the urethane part, and aliphatic or alicyclic isocyanate is used as well for isocyanate of the curing agent, whereby the primer layer itself is improved in a weatherability since the above isocyanates themselves are excellent in a hydrolysis resistance, a heat resistance and the like. Accordingly, a weatherability in an effect of enhancing an adhesive property between the thermoplastic resin sheet and the curing type resin layer which is brought about by the primer layer is obtained as well, and the adhesive property with the passage of time can be prevented from being reduced.

The acryl-urethane block copolymer described above may have a chain part (acryl component) (i) of an acryl base monomer which is obtained by polymerization reaction of the acryl base monomer and may contain a part of a chain (or a chain formed by copolymerization with other monomers) of the acryl base monomer, and it is a compound having a urethane part-containing part (urethane component) (iv) which is obtained by reacting (urethane reaction) a hydroxyl group-containing compound (ii) containing at least a chain part other than a chain (or a chain formed by copolymerization with other monomers) of the acryl base monomer with an isocyanate group-containing compound (iii).

The hydroxyl group-containing compound (ii) described above may be a so-called acrylpolyol obtained by making use of polymerization reaction of an acryl base monomer, and making use of polyols (for example, polycarbonatepolyol and the like) other than the above polyol increases a freedom of controlling the physical properties and makes it possible to prepare a polymer suited to broader uses.

The acryl-urethane block copolymer is obtained, for example, by reacting acrylpolyol (i) with polycarbonatepolyurethane (iv) obtained by reacting polycarbonatepolyol (ii) with polyisocyanate (iii). In addition to the above, the acryl-urethane block copolymer can be obtained as well by reacting three compounds of the acrylpolyol (i), the polycarbonatepolyol (ii) and the polyisocyanate (iii).

Polycarbonatepolyol, polyesterpolyol, polyestherpolyol and the like are used as the polyol component constituting the urethane component of the above acryl-urethane block copolymer, and acrylpolyol may further be used in combination therewith. Also, the isocyanate component constituting the above urethane component is preferably a component having a weatherability. The isocyanate component having a weatherability is preferably alicyclic isocyanate and aliphatic isocyanate. Incidentally, alicyclic isocyanate may be used in combination with aliphatic isocyanate. For example, IPDI (isophoronediisocyanate), hydrogenated MDI (hydrogenated diphenylmethanediisocyanate) and the like can be used as the alicyclic isocyanate. Also, 1,6-hexamethylenediisocyanate, 2,2,4-trimethylhexamethylene-diisocyanate and the like can be used as the aliphatic isocyanate. They are used alone or in combination of two or more kinds thereof.

The acryl component of the urethane component in the acryl-urethane block copolymer described above includes chain parts of acryl base monomers in polymers comprising monomers of (meth)acrylic acid esters such as methyl (meth)acrylate, ethyl (meth)acrylate, propyl (meth)acrylate, butyl (meth)acrylate, octyl (meth)acrylate, 2-hydroxyethyl (meth)acrylate, 2-hydroxy-3-phenoxypropyl (meth)acrylate and the like and prepolymers comprising two or more kinds of the above monomers. Incidentally, (meth)acrylic acid means acrylic acid or methacrylic acid.

A filler such as silica fine powders and the like and additive such as a light stabilizer and the like in addition to the resins described above may be added to the primer layer 4. The primer layer is formed by coating the above compositions and, if necessary, drying and curing them. To be specific, it is formed by drying (curing) the primer composition by a method such as gravure, roll coating and the like. A coating amount of the primer layer 4 is preferably 1 to 20 $g/m^2$ (dried), more preferably 1 to 5 $g/m^2$ (dried).

The reverse side primer layer 5 of the decorative sheet shown in Fig. 1 is provided in order to enhance an adhesive property between the thermoplastic resin base material sheet 2 such as the polyolefin base resin sheet and the print layer such as the picture print layer 6 and the solid print layer 7, and the same resins as in the primer layer 4 on the surface side described above are preferably used therefor. The reverse side primer layer 5 can be formed by the same means as in the primer layer 4 on the surface side. The primer layer 8 of the decorative sheet shown in Fig. 2 is provided in order to enhance an adhesive property between the thermoplastic resin base material sheet 2 and the print layer such as the solid print layer 7, and when the polyolefin base resin sheet is used for the transparent thermoplastic resin sheet, the same material as in the primer layer 4 described above is preferably used therefor. Further, it can be formed by the same means.

Emboss processing and wiping processing:

The thermoplastic resin base material sheet 2 (or the transparent thermoplastic resin sheet 21) and the curing type resin layer 3 may be provided on surfaces thereof with irregular patterns by hot press and hair line processing, and the above irregular patterns may be subjected to wiping processing to fill the concave parts with a wiping ink (not illustrated). The irregular patterns include, for example, conduit grooves, stone slab surface undulations (granitic cleavage surfaces and the like), cloth surface texture, satin finished surface, ripple marks, hair lines, line grooves and the like. A method for forming the irregular patterns includes an emboss processing method carried out by heating and pressurizing, a hair line processing method, a shaping film method and the like. In the emboss processing method, the thermoplastic resin base material sheet 2 (or the transparent thermoplastic resin sheet 21) and the curing type resin layer are heated and softened, and the surface is pressed by an emboss plate to be provided with irregular patterns of the emboss plate and cooled to fix the patterns. Publicly known emboss equipments of a single layer type and a rotary type are used therefor. For example, in the emboss processing, an anastatic printing is pressed onto a surface of the curing type resin layer at a sheet temperature of 120 to 160°C and a pressure of 10 to 40 kg/cm$^2$ to transfer the anastatic printing patterns. Also, the wiping processing is carried out, as described in Japanese Patent Publication No. 14312/1983, by coating a color ink on irregular patterns and then subjecting them to wiping processing to fill the concave parts of the irregular patterns with the color ink.

Allowed to be used as the other emboss processing and wiping processing methods is a method in which at least concave parts of a roll concave plate are filled with a liquid matter of a curing type resin, and a base material sheet is superposed on the roll concave plate and irradiated with an ionizing radiation to semi-cure the curing type resin; then, the base material sheet is peeled off from the roll concave plate to transfer a curing type resin layer of the irregular patterns onto the base material sheet; further, a color ink is coated on the irregular patterns staying in a semi-curing state, and then the resin layer is subjected to wiping processing to fill the concave parts of the irregular patterns with the color ink; and the irregular patterns staying in a semi-curing state are irradiated once again with an ionizing radiation to cure the curing type resin layer.

Picture print layer and solid print layer:

The picture print layer 6 is formed by printing patterns such as woodgrain patterns, marble grain patterns, texture patterns, lenticel patterns, geographic figures, literatures, marks, line arts, various abstract patterns and the like. The solid print layer 7 is formed by carrying out solid printing with a color ink having a masking property. The above print layers may be constituted either only from the picture print layer 6, only from the solid print layer 7 or from both of the picture print layer 6 and the solid print layer 7.

The picture print layer 6 and the solid print layer 7 can be formed by printing or coating with a conventional ink for printing pictures. Used as the ink described above are inks which comprise a binder and a colorant and in which used as the binder is, for example, one kind or a mixture of two or more kinds of chlorinated polyolefins such as chlorinated polyethylene, chlorinated polypropylene and the like, polyester resins, polyurethane resins (two-component curing type polyurethane resins or thermoplastic polyurethane resins), acryl resins, polyvinyl acetate resins, vinyl chloride•vinyl acetate copolymers, cellulose base resins and the like. The colorant described above includes one kind or a mixture of two or more kinds of pigments or dyes such as titan white, carbon black, iron oxide red, chrome yellow, ultramarine blue, phthalocyanine blue, quinacridone, isoindolinone and the like, metal flake powders of aluminum, brass and the like and photoluminescent pigments comprising flake powders such as titanium dioxide-covered mica and the like. In the picture print layer, the deep patterns can be obtained by adjusting the positions with the irregular patterns described above and the patterns formed by the color ink filled in the concave parts and superposing them.

When the polyolefin base resin sheet is used as the base material sheet, a polyurethane resin base ink or a chlorinated polyolefin base ink is preferably used for the ink in the picture print layer. Also, the picture print layer and the solid print layer may be formed from a metal thin film in addition to forming by printing. For example, metals such as aluminum, chromium, gold, silver, copper and the like are used to form a metal thin film by a method such as vacuum deposition, sputtering and the like. The above metal thin film may be formed overall solidwise, partially solidwise or in a pattern form such as a picture and the like or may be combined with the picture print layer and the solid print layer described above.

A printing method used for forming the picture print layer 6 includes, for example, a gravure printing method, an offset printing method, a screen printing method, a flexographic printing method, an electrostatic printing method, an ink jet printing method and the like. Also, when an overall solidwise print layer is formed, a printing method therefor includes, for example, various coating methods such as a roll coating method, a knife coating method, an air knife coating method, a die coating method, a lip coating method, a comma coating method, a kiss coating method, a flow coating method, a dip coating method and the like. In addition to the above methods, a hand drawing method, an ink flowing method, a photographic method, a transferring method, a laser beam drawing method, an electron beam drawing method, a partial vapor deposition method of metals and the like, an etching method and the like may be used, or they may be used in combination with other forming methods.

Decorative material:

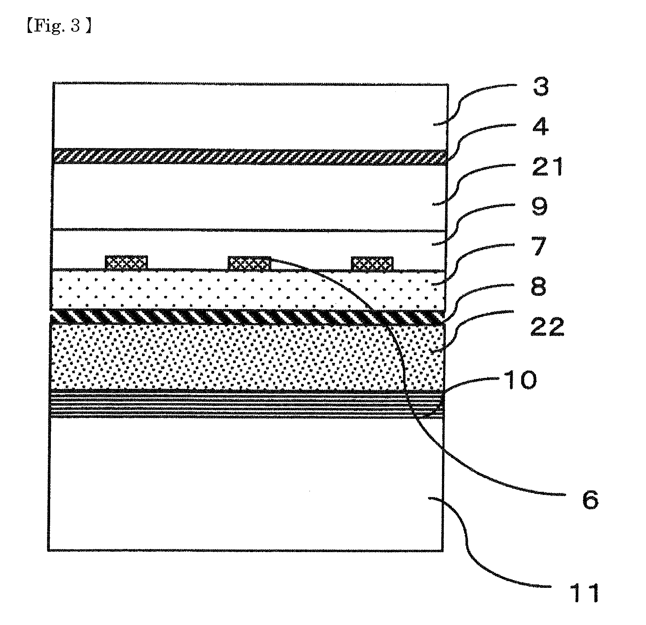

In the decorative sheet formed in the above manner, a solid print layer side in a case of the decorative sheet shown in Fig. 1 and a thermoplastic resin base material sheet side in a case of the decorative sheet shown in Fig. 2 are adhered to other base materials via the adhesive layer 10 and the like, whereby decorative materials can be formed and used. A decorative material prepared by using the decorative sheet shown in Fig. 2 is shown in Fig. 3.

A material of the adhesive layer 10 is suitably selected according to the other base material 11 (hereinafter referred to as the adherend) to which the decorative sheet is adhered. It is preferably, for example, vinyl chloride-vinyl acetate copolymer having a hydroxyl group and urethane base adhesives. When the decorative sheet can be adhered to the adherend by means such as heat fusion and the like, the adhesive layer may be omitted.

The adherend 11 of the decorative sheet shall not specifically be restricted, and used are woody materials such as sliced veneers, wood single panels, wood chipboards, particle boards, woody materials comprising middle density fiber boards (MDF) and the like, metal materials, plastic materials, ceramic materials and the like. The decorative sheet can be used for various applications by adhering it to the materials described above and subjecting it to prescribed molding processing. It can be used, for example, for interior decoration of walls, ceilings, floors and the like in buildings, surface decoration of window frames, door frames, hand rails and the like in fittings, surface decoration of furniture such as chests and the like and interior decoration of cars, electric trains, aircrafts and the like.

The decorative sheet of the present invention may be, though not illustrated, a decorative sheet in which a backer material is laminated on a surface of the solid print layer 7 described above shown in Fig. 1 or a surface of the synthetic resin color sheet 22 shown in Fig. 2 via the two-component curing type polyurethane base adhesive explained in the adhesive layer 9 described above. The backer material described above is suitably a resin containing no halogen elements in a molecular structure considering environmental problems in recent years, and capable of being shown as the examples thereof are, for example, sheets comprising resins such as polyethylene, polypropylene, ethylene-vinyl alcohol copolymers, polymethylene, polymethylpentene, polyethylene terephthalate, polybutylene terephthalate, polycarbonate, polyallylate, polyethylene naphthalate-isophthalate copolymers, polyimide, polystyrene, polyamide, ABS resins and the like, crystalline polyethylene terephthalate sheets (so-called C-PET), non-crystalline polyethylene terephthalate sheets (so-called A-PET), polyalkylene terephthalate sheets having a high heat resistance (so-called PET-G (trade name) manufactured by Eastman Chemical Company) and the like. A thickness of the backer material described above is suitably about 80 to $500 \mu m$. The above sheets may comprise either a single layer or plural layers. Further, the resins used therefor may be alone or a mixture, and polyester base sheets are preferred. The backer material described above can be subjected, if necessary, on a required surface to ready adhesion treatment such as corona discharge treatment, ozone treatment, plasma treatment and the like.

Examples

Example 1

A decorative sheet for floor materials was prepared according to the following process. The average particle .diameter was measured by a laser diffraction method.

A base material sheet comprising a colored polypropylene base resin having a thickness of $60 \mu m$ was subjected on a surface and a rear surface to corona discharge treatment. Then, a solution prepared by dissolving a resin obtained by adding 8 parts by weight of hexamethylenediisocyanate to 100 parts by weight of a polyurethane resin and an acrylpolyol base resin in a mixed solvent of methyl ethyl ketone and butyl acetate was coated on a surface of the sheet by a gravure printing method so that a solid matter amount was 2 g/m², whereby a primer layer having a thickness of $2 \mu m$ for forming a picture print layer was formed. Further, a solution prepared by dissolving a resin obtained by adding 5 parts by weight of hexamethylenediisocyanate to 100 parts by weight of a urethane base resin and a nitrocellulose resin in a mixed solvent of methyl ethyl ketone and butyl acetate was coated on a surface of the base material sheet which was reverse to the picture print layer by a gravure printing method so that a solid matter amount was 2 g/m², whereby a rear surface primer layer having a thickness of $2 \mu m$ was formed.

A print ink (a two-component curing type print ink comprising acrylpolyol as a base resin and containing isocyanate as a curing agent) comprising a two-component curing type urethane resin as a base resin was coated on the primer layer for forming a picture print layer to form a picture print layer of a woodgrain picture having a thickness of $2 \mu m$. A coating liquid comprising a two-component curing type urethane resin was coated on the picture print layer described above to form a transparent adhesive layer having a thickness of $2 \mu m$. A polypropylene base thermoplastic elastomer comprising an ethylene-propylene-butene copolymer as a principal component was heated, molten, extruded and coated on the transparent adhesive layer by means of a T die extruding machine to form a transparent resin layer having a thickness of 80μm.

A coating liquid of a two-component curing type urethane resin was coated on the transparent resin layer to form a transparent primer layer having a thickness of 2μm.

A coating liquid for forming an actinic energy ray curing type resin layer having a the following coating liquid composition (a) was coated on the transparent primer layer of the sheet obtained in the step described above by a gravure coating method so that a solid content was 15 g/m², and then it was dried, whereby an uncured actinic energy ray curing type resin layer was formed. Then, the uncured resin layer was irradiated with an actinic energy ray on the conditions of an accelerating voltage of 175 kev and an absorbed dose of 5 Mrad (50 kGy) under the environment of an oxygen concentration of 100 ppm to cure the resin, whereby an actinic energy ray curing type resin layer having a thickness of 15μm was formed to prepare a decorative sheet for floor materials. Coating liquid composition (a) for an actinic energy ray curing type resin layer:

| | |
|---|---|
| • Difunctional urethane acrylate oligomer | 80 parts by weight |
| • UA306H | 20 parts by weight |
| • Silica treated with a silicone oil | 8 parts by weight |

(BET value: 300 m²/g, average particle
diameter: 12μm, hydrophobicity degree: 50)

Preparation and coating of difunctional urethane acrylate oligomer:

A reaction vessel equipped with a stirrer for synthesizing a difunctional urethane acrylate oligomer, a temperature controlling device and a condenser was charged with 1000 parts by weight of polyesterdiol (Adeka New Ace F15-20, polyesterdiol comprising ethylene glycol and adipic acid, weight average molecular weight: 1000, manufactured by Asahi Denka Co., Ltd.) and 444 parts by weight of isophoronediisocyanate to react them at 75°C for 10 hours. Then, the reaction liquid was cooled down to 35°C, and the reaction vessel was charged with 400 parts by weight of 2-hydroxyethyl acrylate, 0.5 part by weight of methoquinone and 0.2 part by weight of dibutyltin dilaurate to react them at 75 to 85°C. The reaction was continued until an isolated isocyanate group was reduced to 0.1 % or less to obtain a difunctional urethane acrylate oligomer having a weight average molecular weight of 1700.

Example 2

A decorative sheet was prepared in the same manner as in Example 1, except that following silica was used in place of silica used in Example 1, and it was used as a decorative sheet for floor materials.

| | |
|---|---|
| •Silica treated with a silicone oil | 8 parts by weight |

(BET value: 300 m²/g, average particle
diameter: 12μm, hydrophobicity degree: 60)

Example 3

A decorative sheet was prepared in the same manner as in Example 1, except that following silica was used in place of silica used in Example 1, and it was used as a decorative sheet for floor materials.

| | |
|---|---|
| • Silica treated with a silicone oil | 8 parts by weight |

(BET value: 300 m²/g, average particle
diameter: 12μm, hydrophobicity degree: 40)

Example 4

A decorative sheet was prepared in the same manner as in Example 1, except that the following coating liquid composition (b) was used in place of the coating liquid composition (a) for an actinic energy ray curing type resin layer used in Example 1 to form an actinic energy ray curing type resin layer having a thickness of 5μm, and it was used as a decorative sheet for fittings.

Coating liquid composition (b) for an actinic energy ray curing type resin layer:

| | |
|---|---|
| • Difunctional urethane acrylate oligomer | 65 parts by weight |
| • UA306H | 35 parts by weight |
| • Silica treated with a silicone oil | 20 parts by weight |

(BET value: 150 m$^2$/g, average particle diameter: 6$\mu$m, hydrophobicity degree: 50)

Comparative Example 1

A decorative sheet was prepared in the same manner as in Example 1, except that following silica was used in place of silica used in Example 1, and it was used as a decorative sheet for floor materials.

| | |
|---|---|
| • Silica treated with a silicone oil | 8 parts by weight |

(BET value: 300 m$^2$/g, average particle diameter: 12$\mu$m, hydrophobicity degree: 30)

Comparative Example 2

A decorative sheet was prepared in the same manner as in Example 1, except that following silica was used in place of silica used in Example 1, and it was used as a decorative sheet for floor materials.

| | |
|---|---|
| • Silica treated with a silicone oil | 8 parts by weight |

(BET value: 300 m$^2$/g, average particle diameter: 12$\mu$m, hydrophobicity degree: 70)

Comparative Example 3

A decorative sheet was prepared in the same manner as in Example 4, except that following silica was used in place of silica used in Example 4, and it was used as a decorative sheet for fittings.

| | |
|---|---|
| • Silica treated with a silicone oil | 20 parts by weight |

(BET value: 150 m$^2$/g, average particle diameter: 6$\mu$m, hydrophobicity degree: 30)

Comparative Example 4

A decorative sheet was prepared in the same manner as in Example 4, except that following silica was used in place of silica used in Example 4, and it was used as a decorative sheet for fittings.

| | |
|---|---|
| • Silica treated with a silicone oil | 20 parts by weight |

(BET value: 150 m$^2$/g, average particle diameter: 6$\mu$m, hydrophobicity degree: 70)

Test Example 1

The decorative sheets obtained above in Examples 1 to 4 and Comparative Examples 1 to 4 were used to carry out the following evaluation tests. The results thereof are shown in Tables 1 and 2.

Alkali resistance:

A sodium hydroxide aqueous solution of 5 % was dropwise fallen on the decorative sheet to leave it standing for 24 hours, and then a surface thereof was observed and evaluated according to the following criteria:

A: no whitening
B: a little whitened or changed in gloss
C: whitened

Wax adhesive property test:

All (trade name) manufactured by RINREI WAX CO., LTD. was coated on a surface of the coating film and aged for 24 hours, and then cellophane tape adhesion was evaluated according to the following criteria:

A: no peeling off
B: peeled off by 50 % or less
C: peeled off by 50 % or more

Lacquer adhesive property test:

Lloyd Spray (trade name) manufactured by Lloyd Co., Ltd. was sprayed on a surface of the coating film and dried for 24 hours, and then it was subjected to a cellophane tape adhesion test and evaluated according to the following criteria:

A: no peeling off
B: peeled off by 50 % or less
C: peeled off by 50 % or more

Table 1

|  | Example | | | Comparative Example | |
|---|---|---|---|---|---|
|  | 1 | 2 | 3 | 1 | 2 |
| Alkali resistance | A | A | A | C | A |
| Wax adhesive property | A | A | A | A | C |

Table 2

|  | Example | Comparative Example | |
|---|---|---|---|
|  | 4 | 3 | 4 |
| Alkali resistance | A | C | A |
| Lacquer adhesive property | A | A | C |

INDUSTRIAL APPLICABILITY

The decorative sheet of the present invention is excellent in an abrasion resistance and a scratching resistance and can prevented or inhibited from being whitened while maintaining an adhesive property with a lustering agent such as wax, lacquer and the like even when a surface of the decorative sheet is brought into contact with alkaline detergents, chemicals and the like.

Claims

1.  A decorative sheet prepared by forming a curing type resin layer comprising an actinic energy ray curing type resin on an uppermost surface of a thermoplastic resin base material sheet, wherein the curing type resin layer contains silica, and at least a part of the above silica is silica having a hydrophobicity degree of 40 or more and 60 or less measured according to a methanol titration method.

2. The decorative sheet according to claim 1, wherein the above silica is treated with a silicone oil.

3. The decorative sheet according to claim 1 or 2, wherein the thermoplastic resin base material sheet comprises a polyolefin base resin sheet.

4. A decorative material prepared by laminating the decorative sheet according to any of claims 1 to 3 on an adherend so that the curing type resin layer is an uppermost surface layer.

【Fig. 1】

【Fig. 2】

【Fig. 3】

**Europäisches Patentamt**
**European Patent Office**
**Office européen des brevets**

# EUROPEAN SEARCH REPORT

Application Number

EP 09 17 4193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI Week 200970<br>Thomson Scientific, London, GB; AN 2009-Q05456<br>XP002576472<br>-& CN 101 549 615 A (DAINIPPON PRINTING CO LTD) 7 October 2009 (2009-10-07)<br>* abstract *<br>* the whole document *<br>-& JP 2009 262552 A (DAINIPPON PRINTING CO LTD) 12 November 2009 (2009-11-12)<br>* the whole document *<br>-& KR 2009 0104710 A<br>6 October 2009 (2009-10-06)<br>* the whole document *<br>----- | 1-4 | INV.<br>B32B27/08<br>B32B27/32<br>C09D175/14<br>B32B27/20 |
| Y,D | DATABASE WPI Week 200581<br>Thomson Scientific, London, GB; AN 2005-790217<br>XP002576473<br>-& JP 2005 313600 A (DAINIPPON PRINTING CO LTD) 10 November 2005 (2005-11-10)<br>* abstract *<br>* paragraphs [0058] - [0101]; examples; table 1 *<br>----- | 1-4 | TECHNICAL FIELDS SEARCHED (IPC)<br><br>B32B<br>C09D |
| Y | DATABASE WPI Week 200572<br>Thomson Scientific, London, GB; AN 2005-692947<br>XP002576474<br>-& JP 2005 255782 A (AICA KOGYO CO LTD) 22 September 2005 (2005-09-22)<br>* abstract *<br>* paragraphs [0008] - [0026]; examples *<br>* paragraphs [0004], [0012] *<br>-----<br><div align="right">-/--</div> | 1-4 | |

The present search report has been drawn up for all claims

| Place of search | Date of completion of the search | Examiner |
|---|---|---|
| Munich | 6 April 2010 | Hutton, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Application Number

EP 09 17 4193

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | DATABASE WPI Week 200418 Thomson Scientific, London, GB; AN 2004-183866 XP002576475 -& JP 2003 276133 A (DAINIPPON PRINTING CO LTD) 30 September 2003 (2003-09-30) * abstract * * paragraph [0056]; examples * ----- | 1-4 | |
| | | | TECHNICAL FIELDS SEARCHED (IPC) |

The present search report has been drawn up for all claims

| Place of search | Date of completion of the search | Examiner |
|---|---|---|
| Munich | 6 April 2010 | Hutton, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

## REFERENCES CITED IN THE DESCRIPTION

**Patent documents cited in the description**

- JP 2001260282 A
- JP 2003276133 A
- JP 2005313600 A
- JP 2042080 A
- JP 4019924 A
- JP 50019132 A
- JP 4288214 A
- JP 5057786 A
- JP 56045768 A
- JP 59051900 A
- JP 61005895 A
- JP 3002666 A
- JP 6023278 A
- JP 9111055 A
- JP 5077371 A
- JP 7316358 A
- JP 58014312 A